# EUROPÄISCHE PATENTSCHRIFT

(11) **EP 0 721 066 B1**
(45) Veröffentlichungstag und Bekanntmachung des Hinweises auf die Patenterteilung: **25.01.2006**
(21) Anmeldenummer: 95118495.1
(22) Anmeldetag: 24.11.1995
(51) Int. Cl.: F04B 39/16, F04B 39/02

(54) **Kolbenkompressor für Kälteanlagen**
Piston compressor for refrigeration systems
Compresseur à piston pour systèmes frigorifiques

(30) Priorität: 09.12.1994 DE 4443847
(43) Veröffentlichungstag der Anmeldung: 10.07.1996
(73) Patentinhaber: HANSA METALLWERKE AG, 70567 Stuttgart (DE)
(72) Erfinder:
(74) Vertreter: Ostertag, Ulrich

(56) Entgegenhaltungen:
- EP-A- 0 277 582
- PATENT ABSTRACTS OF JAPAN vol. 016, no. 191 (M-1245), 8.Mai 1992 & JP 04 027781 A (MATSUSHITA REFRIG CO LTD), 30.Januar 1992,
- PATENT ABSTRACTS OF JAPAN vol. 010, no. 222 (M-504), 2.August 1986 & JP 61 058986 A (HITACHI LTD;OTHERS: 01), 26.März 1986,
- PATENT ABSTRACTS OF JAPAN vol. 007, no. 029 (M-191), 5.Februar 1983 & JP 57 183581 A (MITSUBISHI DENKI KK), 11.November 1982,
- PATENT ABSTRACTS OF JAPAN vol. 009, no. 149 (M-390), 25.Juni 1985 & JP 60 026191 A (MITSUBISHI JUKOGYO KK), 9.Februar 1985,

## Beschreibung

Die Erfindung betrifft einen Kompressor für Kälteanlagen mit
a) einem Gehäuse, welches einen Einlaß und einen Auslaß für Kältemittel aufweist;
b) mindestens einer im Gehäuse angeordneten Verdrängungskammer, die mit dem Einlaß und dem Auslaß für das Kältemittel verbindbar ist und in der ein Verdrängungskörper hin- und herbewegbar ist;
c) einem im Gehäuse untergebrachten Ölsumpf;
d) einer Einrichtung, welche im Betrieb dem Ölsumpf Öl entnimmt und den zu schmierenden, relativ zueinander bewegten Teilen zufördert;
e) mit einem Rücklauf, über welchen Öl, das in das Kältemittel übergetreten ist, in den Ölsumpf zurückfließt;
f) mit mindestens einer Öffnung im Gehäuse, über welche der Ölsumpf zugänglich ist.

Mit der Umstellung von Kälteanlagen auf FCKW-freie Kältemittel finden als Schmieröle in den Kompressoren, die Teil der Kälteanlagen sind, zunehmend Esteröle Verwendung. Diese sind mit den neuen FCKW-freien Kältemitteln gut verträglich. Sie haben aber den Nachteil, stark hygroskopisch zu sein. Da an den zu schmierenden Flächen, bei Kolbenkompressoren insbesondere an den Zylinderlaufflächen, immer ein gewisser Übertritt des Schmieröles in das Kältemittel stattfindet, reichert sich das zirkulierende Kältemittel mit dem Schmieröl an. Handelt es sich dabei, wie erwähnt, um Esteröl, so nimmt dieses bevorzugt die Feuchtigkeit auf, welche durch die nicht immer feuchtigkeitsdichten Schläuche und Leitungen in den Kältemittelkreislauf eintritt. Wird das mit dem Kältemittel zirkulierende Schmieröl abgeschieden und über einen Rücklauf in den Ölsumpf zurückgeführt, so sammelt sich dort zunehmend Ö1, welches einen hohen Feuchtigkeitsgehalt aufweist. Bereits bei einer Feuchtigkeit von mehr als 200 ppm entstehen im Ö1 jedoch Säuren, welche die beweglichen heißen Aluminiumteile des Kompressors angreifen können.

Dem allem könnte grundsätzlich durch Einsatz von zuverlässig feuchtigkeitsundurchlässigen Schläuchen und Kältemittelleitungen entgegengewirkt werden. Dies ist aber zum einen verhältnismäßig teuer; zum anderen ist eine derartige Nachrüstung bereits vorhandener Kälteanlagen häufig nicht möglich.

Einen Kompressor der eingangs genannten Art Art zeigt z. B. die JP 60 026 191 A. Zur Schmierung des Kompressors ragt ein Ansaugrohr in den Ölsumpf, an dessen offenem Ende ein Ölfilter angeordnet ist. Zur Entfernung von Wasser aus dem Gemisch aus Schmieröl und halogenisiertem Kältemittel wird dort vorgeschlagen, in den Ölfilter ein Trockenmittel einzubringen. Dadurch soll die Bildung von Säuren verhindert werden. Diese Druckschrift gibt keine Auskunft darüber, ob und wie das Ölfilter und/oder das Trockenmittel ausgetauscht werden können.

Bekannte als Kolbenkompressoren ausgestaltete Kompressoren der eingangs genannten Art besitzen im Gehäuse zwei Öffnungen, über welche von außen her der Ölsumpf zugänglich ist. Die eine dieser Öffnungen bietet die Möglichkeit, in den Ölsumpf eine Ölsumpfheizung einzuführen. Diese Ölsumpfheizung wird jedoch in den wenigsten Fällen tatsächlich benötigt. Die zweite Öffnung dient als Ölablaßöffnung; durch Herausdrehen eines Verschlußstopfens kann somit über die Ölablaßöffnung das im Ölsumpf befindliche Öl abgezogen werden.

Eine weitere, für ein Ölsieb vorgesehene Öffnung geht beispielsweise aus der JP 61 058 986 hervor. Dort ist im Sumpf eines Kompressors ein durch zwei Ventile absperrbares Siebgehäuse mit eigenem Zugang von außen untergebracht. Durch Schließen der beiden Ventile kann so das Ölsieb einfach entfernt und gereinigt werden. Eine Trocknung ist bei diesem Kompressor nicht vorgesehen.

Aufgabe der vorliegenden Erfindung ist es, einen Kompressor der eingangs genannten Art so auszugestalten, daß auch bei Verwendung von Esterölen als Schmierölen und bei Verwendung gewöhnlicher Kältemittelschläuche eine unzulässige Anreicherung des im Ölsumpf stehenden Öles mit Feuchtigkeit nicht erfolgt.

Diese Aufgabe wird erfindungsgemäß dadurch gelöst, daß durch die Öffnung des Gehäuses eine Filtertrocknerkerze in den Ölsumpf eingeführt und mit Hilfe eines die Öffnung dicht verschließenden Verschlußstopfens in der Öffnung lösbar befestigt ist.

Erfindungsgemäß wird also eine vom Hersteller des Kompressors aus anderen Gründen vorgesehene Zugangsöffnung zum Ölsumpf zur Halterung einer Filtertrocknerkerze "zweckentfremdet", die durch diese Öffnung von außen her in den Ölsumpf eingeführt und in der Öffnung mit einem Schraubstopfen so befestigt werden kann, daß sie frei in den Ölsumpf hineinragt. Diese ohne weiteres nachrüstbare Filtertrocknerkerze entzieht dann dem sich im Ölsumpf sammelnden Öl die Feuchtigkeit, so daß sich die schädlichen, die Aluminiumteile angreifenden Säuren nicht mehr bilden können. Ist die Filtertrocknerkerze nach einer bestimmten Standzeit erschöpft, kann sie problemlos durch die Öffnung im Gehäuse des Kompressors ausgetauscht werden.

Bei einem Ausführungsbeispiel der Erfindung ist die Öffnung des Gehäuses zur Aufnahme einer Ölsumpfheizung ausgebildet und zur Halterung der Filterkerze zweckentfremdet. Wie bereits angedeutet, werden in den allermeisten Anwendungszwecken Ölsumpfheizungen nicht benötigt. Dann steht problemlos die entsprechende Öffnung im Gehäuse zum Einführen und Haltern der erfindungsgemäßen Filtertrocknerkerze zur Verfügung.

Bei einer zweiten Ausführungsform der Erfindung ist die Öffnung im Gehäuse, wie ebenfalls schon angedeutet, als Ölablaßöffnung ausgebildet und übernimmt zusätzlich die Funktion der Halterung der Filtertrocknerkerze. Diese Ausgestaltung der Erfindung ist grundsätzlich immer möglich, also auch bei solchen Kompressoren, die werksseitig nicht zur Aufnahme einer Ölsumpfheizung vorbereitet sind. Eine Ölablaßöffnung, über welche das Öl aus dem Ölsumpf entfernbar ist, ist bei allen Kompressoren erforderlich und vorhanden. Die Funktion als Ölablaßöffnung bleibt bei der vorliegenden Ausgestaltung der Erfindung unberührt; die Funktion der Halterung der erfindungsgemäßen Filtertrocknerkerze tritt einfach hinzu.

In vielen Fällen ist die Konstruktion der bekannten Kompressoren so, daß der Ansaugweg vom Ölsumpf zur Ölfördereinrichtung teilweise über die Ölablaßöffnung bzw. den diesen verschließenden Verschlußstopfen führt. In diesem Falle empfiehlt sich eine Ausgestaltung der Erfindung, bei welcher die Filtertrocknerkerze in einer Weise mit der Ölablaßöffnung bzw. dem diesen verschließenden Verschlußstopfen verbunden ist, daß das Öl von der Ölfördereinrichtung zumindest teilweise über die Filtertrocknerkerze angesaugt wird. Auf diese Weise tritt das Öl in besonders intensive Wechselwirkung mit dem in der Filtertrocknerkerze enthaltenen Trockenmittel. Ein Nachteil ist allerdings, daß die Filtertrocknerkerze die Förderleistung der Ölförderpumpe drosselt.

Eine bevorzugte Ausführungsform der Erfindung zeichnet sich dadurch aus, daß das äußere, der Öffnung benachbarte Ende der Filtertrocknerkerze derart am Verschlußstopfen befestigt ist, daß Filtertrocknerkerze und Verschlußstopfen eine gemeinsam am Kompressor montierbare Einheit bilden. Die Filtertrocknerkerze wird also mit Hilfe des Verschlußstopfens aus dem Ölsumpf herausgezogen. Dies schließt allerdings nicht aus, daß danach die Filtertrocknerkerze von dem Verschlußstopfen abgenommen und gegen eine neue ausgetauscht wird, worauf dann die Einheit von Filtertrocknerkerze und Verschlußstopfen in umgekehrter Weise wieder an dem Kompressor angebracht wird.

Anders sind diesbezüglich die Verhältnisse bei einer Ausführungsform der Erfindung, bei welcher das äußere, der Öffnung benachbarte Ende der Filtertrocknerkerze an der Öffnung befestigt und dort durch den Verschlußstopfen gesichert ist. In diesem Falle folgt bei einer Entfernung des Verschlußstopfens die Filtertrocknerkerze nicht zwangsläufig nach; sie wird vielmehr als getrenntes Teil nach dem Herausschrauben des Verschlußstopfens entfernt.

Dies kann vorzugsweise so geschehen, daß an der Öffnung eine radiale Stufe ausgebildet ist, daß an das der Öffnung benachbarte Ende der Filtertrocknerkerze ein radialer Flansch angeformt und durch den Verschlußstopfen gegen die Stufe der Öffnung gedrückt ist.

Dieses Andrücken des radialen Flansches der Filtertrocknerkerze an die Stufe der Öffnung muß nicht notwendig durch unmittelbaren Kontakt von Verschlußstopfen und Flansch erfolgen. Insbesondere dann, wenn die erfindungsgemäße Filtertrocknerkerze in die Ölablaßöffnung eingeführt ist, ist eine Ausgestaltung von Vorteil, bei welcher zwischen der inneren Stirnfläche des Verschlußstopfens und dem radialen Flansch der Filtertrocknerkerze eine Druckfeder angeordnet ist. Durch den Zwischenraum, der von der Druckfeder zwischen dem radialen Flansch und der Stirnfläche des Verschlußstopfens freigehalten wird, kann dann das von der Ölfördereinrichtung dem Ölsumpf entnommene und durch die Filtertrocknerkerze hindurchgesaugte Ö1 zu einem Ansaugkanal strömen, welcher in der Wand des Gehäuses ausgebildet ist und in die Wand der Ölablaßöffnung mündet.

Die Erfindung betrifft außerdem eine Filtertrocknerkerze zur Verwendung bei einem Kompressor der eingangs genannten Art, die dadurch gekennzeichnet ist, daß sie zum Einführen in eine Öffnung des Gehäuses des Kompressors in den Ölsumpf und zur Befestigung in dieser Öffnung mit Hilfe eines Verschlußstopfens ausgebildet ist.

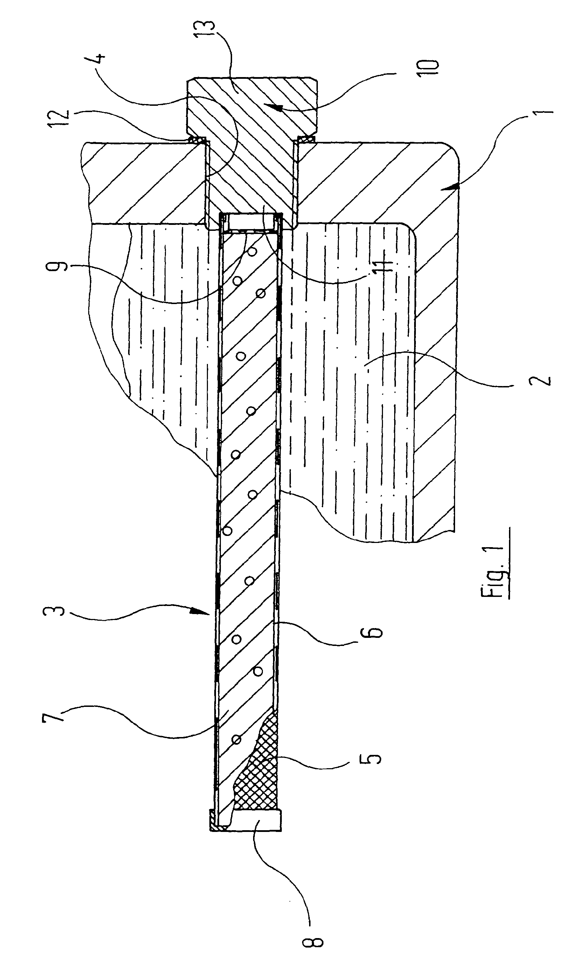

Ausführungsbeispiele der Erfindung werden nachfolgend anhand der Zeichnung näher erläutert; es zeigen
- Figuren 1 bis 4:: Teilschnitte durch das Gehäuse eines Kolbenkompressors für Kälteanlagen im Bereich des Ölsumpfes mit jeweils einer dort eingesetzten Filtertrocknerkerze.

In Figur 1 ist ein kleiner Bereich eines Gehäuses 1 eines Kolbenkompressors für eine Kälteanlage, insbesondere eine Klimaanlage, dargestellt. Der gezeigte Ausschnitt liegt im unteren Bereich des Gehäuses 1 und umschließt einen Ölsumpf 2, dem im Betrieb des Kompressors eine Ölförderpumpe (in der Zeichnung nicht dargestellt) ständig Öl entnimmt und dieses den zu schmierenden beweglichen Teilen des Kompressors, insbesondere auch den Zylinderlaufflächen, zuführt. Dieses Schmieröl tritt dabei zum Teil auch in den Kältemittelkreislauf über und reichert sich im Kältemittel in nicht unerheblichem Maße an.

In jüngster Zeit kommen aus Umweltschutzgründen zunehmend FCKW-freie Kältemittel in Einsatz. Diese neuen Kältemittel erfordern die Verwendung von Esterölen als Schmierölen, die jedoch ihrerseits den Nachteil aufweisen, stark hygroskopisch zu sein. Zirkuliert nunmehr das Kältemittel mit dem in ihm enthaltenen Esteröl durch die im allgemeinen vorhandenen Kältemittelschläuche, so reichert sich in dem Esteröl Feuchtigkeit an, da die Kältemittelschläuche nicht vollständig feuchtigkeitsdicht sind. Das vom Kältemittel mitgeführte Esteröl wird in an und für sich bekannter Weise aus dem Kältemittelkreislauf wieder abgeschieden und fließt in den Ölsumpf 2 zurück, so daß letztlich das sich in diesem Ölsumpf 2 sammelnde Öl einen nicht unbeträchtlichen Feuchtigkeitsgehalt aufweist.

Aus diesem Grunde ist bei dem in Figur 1 dargestellten Kolbenkompressor eine Filtertrocknerkerze vorgesehen, die insgesamt das Bezugszeichen 3 trägt. Die Filtertrocknerkerze 3 ist durch eine Öffnung 4 des Gehäuses 1 in den Ölsumpf 2 eingeführt, die bei Kolbenkompressoren normalerweise vorhanden und dort für einen anderen Zweck vorgesehen ist. Bei dem in Figur 1 dargestellten Ausführungsbeispiel ist die werksseitig vom Hersteller des Kompressors vorgesehene Zweckbestimmung der Öffnung 4 die, eine Ölsumpfheizung aufzunehmen. Diese Ölsumpfheizung wird jedoch in den allermeisten Fällen nicht benötigt. Dann kann, wie in Figur 1 dargestellt, die Öffnung 4 zum Einführen und Befestigen der Filtertrocknerkerze 3 genutzt werden.

Wie Figur 1 deutlich macht, umfaßt die Filtertrocknerkerze 3 einen zylindrischen Siebmantel 5, der über einen perforierten, ebenfalls zylindrischen Stützmantel 6 gelegt ist. Innerhalb des Stützmantels 6 wiederum befindet sich eine Schüttung 7 aus Trockenmittel, z.B. einem geeigneten Zeolith.

Das innere, freie Ende der Filtertrocknerkerze 3 wird durch einen aufgesetzten Deckel 8, das äußere, der Öffnung 4 des Gehäuses 1 benachbarte Ende des Innenraumes der Filtertrocknerkerze 3 durch einen eingesetzten topfförmigen Deckel 9 verschlossen.

Die der Wand des Gehäuses 1 und damit der Öffnung 4 benachbarten Enden des Siebmantels 5 und des Stützmantels 6 der Filtertrocknerkerze 3 sind in eine zylindrische Ausnehmung 11 eines Verschlußstopfens 10 im Preßsitz eingeführt. Der verschlußstopfen 10 ist in die Öffnung 4 des Gehäuses 1 eingeschraubt; eine Ringdichtung 12 liegt zwischen dem vergrößerten Kopf 13 des Verschlußstopfens 10 und der Außenwand des Gehäuses 1 und verhindert, daß Öl aus dem Ölsumpf 2 durch die Öffnung 4 nach außen tritt.

Die Anordnung ist offensichtlich so, daß die mit dem Verschlußstopfen 10 verbundene, durch Sieb- und Stützmantel 5, 6 sowie die Deckel 8 und 9 zusammengehaltene Trockenmittel-Füllung 7 eine Filtertrocknerkerze 3 bilden, die insgesamt in der Öffnung 4 des Gehäuses 1 befestigt werden kann und zwar so, daß sich die Trockenmittelfüllung 7 in Kommunikation mit dem im Ölsumpf 2 befindlichen, feuchten Ö1 befindet. Die Trockenmittel-Füllung 7 kann auf diese Weise dem Ö1 im Ölsumpf 2 die Feuchtigkeit so weit entziehen, daß der Feuchtigkeitsgehalt des Öles einen bestimmten Grenzwert nicht übersteigt. Die Filtertrocknerkerze 3 kann bei Bedarf entweder als ganze oder nur mit dem am Verschlußstopfen 10 befestigten Teil ausgetauscht und ggf. regeneriert werden.

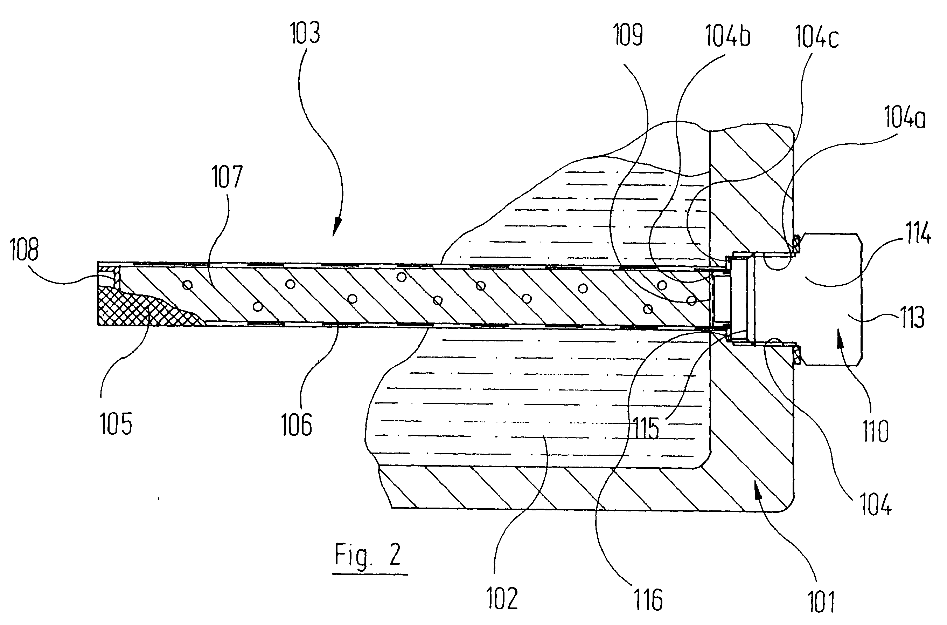

In Figur 2 ist ein zweites Ausführungsbeispiel einer Filtertrocknerkerze dargestellt, die in ihrem eigenen Aufbau sowie in der Art des Einbaus in das Gehäuse eines Kolbenkompressors demjenigen von Figur 1 sehr nahe verwandt ist. Entsprechende Teile sind daher mit demselben Bezugszeichen, zuzüglich 100, gekennzeichnet.

In Figur 2 ist wiederum das Gehäuses 101 eines Kolbenkompressors für eine Kälteanlage im Bereich des Ölsumpfes 102 teilweise im Schnitt dargestellt. In der Wand des Gehäuses 101 ist eine Öffnung 104 vorgesehen, die vom Hersteller des Kompressors ursprünglich dazu gedacht war, eine Heizung in den Ölsumpf 102 einführen zu können. Die Öffnung 104 weist einen äußeren, mit Gewinde versehenen Abschnitt 104a und einen inneren, im Durchmesser etwas kleineren Abschnitt 104b auf, wobei zwischen den Abschnitten 104a und 104b eine Ringstufe 104c gebildet ist. Die Öffnung 104 des Gehäuses 101 ist wiederum durch einen Verschlußstopfen 110 verschlossen, der einen dem vergrößerten Kopf 113 benachbarten, äußeren Gewindeabschnitt 114 und einen den Gewindeabschnitt 114 axial verlängernden zylindrischen Abschnitt 115 aufweist. Der Außendurchmesser des zylindrischen Abschnittes 115 des Verschlußstopfens 110 stimmt mit dem Außendurchmesser der Ringstufe 104c in der Bohrung 104 überein.

Die Filtertrocknerkerze 103 umfaßt wieder einen Doppelmantel aus einem äußeren Siebmantel 105 und einem darunterliegenden Stützmantel 106, der perforiert ist. Innerhalb dieses Doppelmantels, der an beiden Enden durch einen topfförmigen Deckel 108 bzw. 109 verschlossen ist, befindet sich die Trockenmittel-Füllung 107, wie dies auch beim Ausführungsbeispiel von Figur 1 der Fall war.

Das äußere, in Figur 2 also rechte, der Gehäusewand 101 benachbarte Ende des Stützmantel 106 (ggf. des gesamten Doppelmantels 105, 106) läuft nunmehr aber nicht wie beim Ausführungsbeispiel von Figur 1 zylindrisch aus und ist nicht wie dort am Verschlußstopfen 110 befestigt. Vielmehr ist an den Stützmantel 106 (ggf. auch an den Siebmantel 105) ein radial verlaufender Flansch 116 angeformt, dessen Abmessungen der Schulter 104c in der Bohrung 104 des Gehäuses 101 entspricht. Die Filtertrocknerkerze 103 wird also beim Ausführungsbeispiel von Figur 2 von außen her durch die Öffnung 104 des Gehäuses 101 in den Ölsumpf 102 eingeführt, bis ihr radialer Flansch 116 an der Stufe 104c der Bohrung 104 anliegt. In dieser Position wird die Filtertrocknerkerze 103 durch den Verschlußstopfen 110 gesichert, der so in die Bohrung 104 eingeschraubt wird, daß die innenliegende Stirnfläche seines zylindrischen Abschnittes 115 an der äußeren Stirnfläche des Flansches 116 der Filtertrocknerkerze 103 anliegt.

Bei diesem Ausführungsbeispiel wird also die Filtertrocknerkerze 103 nicht mit Hilfe des Verschlußstopfens 110 aus dem Ölsumpf 102 herausgenommen. Vielmehr wird zunächst der Verschlußstopfen 110 entfernt, wonach die in Figur 2 nach rechts zeigende Stirnfläche der Filtertrocknerkerze 103 mit dem Flansch 116 zugänglich wird. Nunmehr kann die Filtertrocknerkerze 103 nach rechts aus dem Gehäuse 101 herausgezogen und ggf. augetauscht werden.

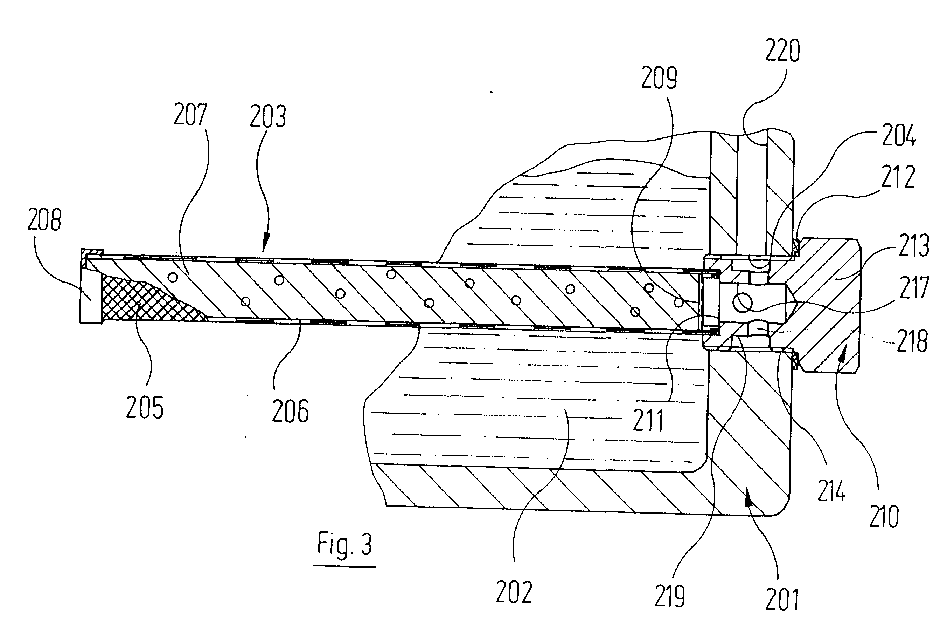

Ein drittes Ausführungsbeispiel einer im Ölsumpf eines Kolbenkompressors angeordneten Filtertrocknerkerze ist in Figur 3 dargestellt. Wiederum ist dieses Ausführungsbeispiel demjenigen von Figur 1 nahe verwandt, so daß entsprechende Teile mit demselben Bezugszeichen, zuzüglich 200, gekennzeichnet sind.

In Figur 3 ist das Gehäuse des Kolbenkompressors ebenfalls mit dem Bezugszeichen 201 versehen; es umgibt in dem dargestellten Bereich einen Ölsumpf 202. Der Ölsumpf 202 ist über eine in der Wand des Gehäuses 201 eingebrachte Bohrung 204 zugänglich, die vom Hersteller des Kolbenkompressors allerdings zunächst für einen anderen Zweck gedacht war: Ihre eigentliche Funktion ist diejenige einer Ölablaßöffnung, die durch einen Ölverschlußstopfen während des Normalbetriebes verschlossen bleibt. Bei dem in Figur 3 dargestellten Ausführungsbeispiel übernimmt der Verschlußstopfen 210 zusätzlich zu der früheren Funktion als Ölverschlußstopfen nunmehr auch die Funktion der Halterung einer Filtertrocknerkerze 203.

Der Aufbau der Filtertrocknerkerze 203 aus Siebmantel 205, Stützmantel 206, Deckeln 208 und 209 und einer Trockenmittel-Füllung 207 in dem so gebildeten Hohlraum stimmt vollständig mit demjenigen von Figur 1 überein, ebenso die Art der Befestigung der Filtertrocknerkerze 203 an dem Verschlußstopfen 210 durch Einführen des zylindrisch auslaufenden rechten Endes in eine zylindrische Ausnehmung 211 des Verschlußstopfens 210.

Bei den bekannten Kolbenkompressoren führt der Ansaugweg der Ölförderpumpe teilweise über den Ölablaßstopfen und von dort über eine in der Gehäusewandung vorgesehene Bohrung. Dieser Ölansaugweg muß selbstverständlich auch bei der durch die Erfindung vorgeschlagene Modifikation beibehalten werden. Aus diesem Grunde ist der Verschlußstopfen 210 mit einer axial sich zur Ausnehmung 211 öffnenden Sackbohrung 217 versehen, die über Radialbohrungen 218 mit einer an der Mantelfläche des Gewindebereiches 214 des Verschlußstopfens 210 vorgesehenen Ringnut 219 kommuniziert.

Durch die Wandung des Gehäuses 201 verläuft eine als Ölansaugkanal dienende Bohrung 220, die in die Öffnung 204 des Gehäuses 201 an einer Stelle mündet, welche mit der Ringnut 219 des Verschlußstopfens 210 in Verbindung steht.

Die in Figur 3 dargestellte Anordnung ist also offensichtlich so, daß das von der Ölförderpumpe über die Bohrung 220 des Gehäuses 201 und die Sackbohrung 217 des Verschlußstopfens 210 angesaugte Ö1 aus dem Ölsumpf 202 durch die Filterkerze 203 hindurch befördert wird. Auf diese Weise kommt das im Ölsumpf 202 befindliche, zu trocknende Ö1 in einen innigeren Kontakt mit der Trockenmittel-Füllung 207, was die Trockenwirkung verbessert. Nachteilig ist allerdings, daß durch die beim Ausführungsbeispiel von Figur 3 im Saugweg liegende Filtertrocknerkerze 203 die Saugleistung der Ölförderpumpe gedrosselt wird. Die Ausgestaltung von Figur 3 ist also nur dort möglich, wo auch nach der entsprechenden Drosselung eine ausreichende Schmierung durch die verbleibende Förderleistung der Ölförderpumpe gewährleistet ist. Wo dies nicht der Fall ist, wird die Ausgestaltung nach den Figuren 1 und 2 eingesetzt.

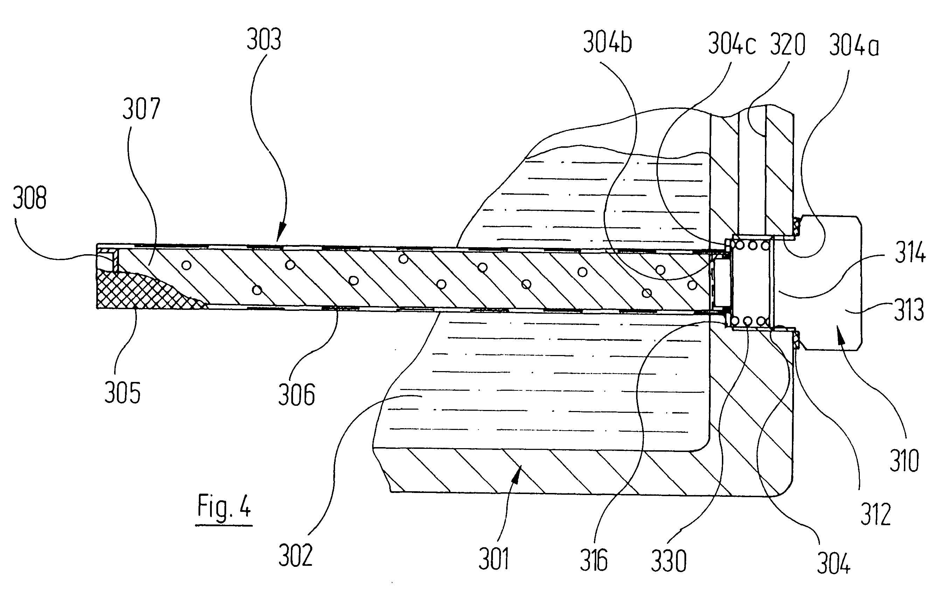

Das in Figur 4 dargestellte Ausführungsbeispiel einer Filtertrocknerkerze basiert auf derselben Grundidee wie die Ausführungsbeispiele nach den Figuren 1 bis 3. In dieser Figur sind Teile, die solchen der Figur 1 entsprechen, mit demselben Bezugszeichen, zuzüglich 300, gekennzeichnet.

Die Filtertrocknerkerze 303 selbst ist identisch wie beim Ausführungsbeispiel von Figur 2 ausgestaltet, so daß hierauf Bezug genommen werden kann.

In Figur 4 sind wiederum zu erkennen das Gehäuse 301 im Bereich eines Ölsumpfes 302, eine Öffnung 304, welche die Wand des Gehäuses 301 durchsetzt und normalerweise vom Hersteller des Kompressors als Ölablaßöffnung gedacht ist. Die Öffnung 304 ist grundsätzlich in derselben Weise wie in Figur 2 ausgebildet. Das heißt: an einen äußeren Gewindeabschnitt 304a größeren Durchmesser schließt sich über eine radiale Stufe 304c ein glatter zylindrischer Abschnitt 304b kleineren Durchmessers an. An der Stufe 304c der Bohrung 304 liegt, ebenfalls in Übereinstimmung mit Figur 2, ein radialer Flansch 316 der Filtertrocknerkerze 303 an.

Da - wie bereits erwähnt - die Öffnung 304 im Gehäuse 301 von Hause aus als Ölablaßöffnung dient, verläuft durch das Gehäuse 301, ähnlich wie in Figur 3, eine als Ölansaugkanal dienende Bohrung 320.

Der in Figur 4 gezeigte Verschlußstopfen 310 besitzt einen verhältnismäßig kurzen Gewindeschaft 314. Dieser ragt bei festgezogenem Verschlußstopfen 310, wie in Figur 4 dargestellt, axial nur so wenig in die Wand des Gehäuses 301 hinein, daß die Mündungsstelle der als Ansaugkanal dienenden Bohrung 320 in die dem Ablassen von Öl dienende Öffnung 304 nicht versperrt ist.

Anders als beim Ausführungsbeispiel von Figur 2 findet zwischen der inneren Stirnfläche des Verschlußstopfens 310 und dem radialen Flansch 316 der Filtertrocknerkerze 303 kein unmittelbarer Kontakt statt. Eine Kraftübertragung erfolgt statt dessen über eine Kompressionsfeder 330, welche zwischen der innenliegenden Stirnfläche des Verschlußstopfens 310 und dem Flansch 316 der Filtertrocknerkerze 303 verspannt ist.

Das Ausführungsbeispiel von Figur 4 unterscheidet sich von demjenigen, welches in Figur 3 dargestellt ist, in ähnlicher Weise wie das in Figur 2 dargestellte Ausführungsbeispiel von demjenigen nach Figur 1: In Figur 4 wird die Filtertrocknerkerze 303 nicht gemeinsam mit dem Verschlußstopfen 310 aus dem Ölsumpf 302 herausgenommen.

Vielmehr wird in Figur 4 zunächst der Verschlußstopfen 310 gelöst; die Druckfeder 330 und nachfolgend die Filtertrocknerkerze 303 werden dann als gesonderte Teile entnommen.

Im Betrieb wird auch beim Ausführungsbeispiel von Figur 4 durch die in der Zeichnung nicht dargestellte Ölförderpumpe das Öl aus dem Ölsumpf 302 über die Filtertrocknerkerze 303, den von dem Verschlußstopfen 310 freigelassenen Bereich der Öffnung 304 im Gehäuse 301 und die Bohrung 320 angesaugt. Erneut findet eine intensive Wechselwirkung zwischen dem Öl und der Filtertrocknerkerze 303 statt, was einerseits den Trockeneffekt verbessert, andererseits aber auch zu einer Drosselung der Förderleistung der Ölförderpumpe führt. Auch das Ausführungsbeispiel von Figur 4 wird deshalb nur dort eingesetzt, wo ausreichend Förderleistung der Ölförderpumpe zur Verfügung steht.

Die obigen Ausführungsbeispiele zeigten die Erfindung anhand eines Kolbenkompressors. Andere Kompressorenarten, beispielsweise Schrauben- oder Taumelscheiben-Kompressoren können jedoch ebenfalls erfindungsgemäß ausgestaltet werden.

## Patentansprüche

1. Kompressor für Kälteanlagen mit
a) einem Gehäuse (1; 101; 201; 301), welches einen Einlaß und einen Auslaß für Kältemittel aufweist;
b) mindestens einer im Gehäuse (1; 101; 201; 301) angeordneten Verdrängungskammer, die mit dem Einlaß und dem Auslaß für das Kältemittel verbindbar ist und in der ein Verdrängungskörper axial hin- und herbewegbar ist;
c) einem im Gehäuse (1; 101; 201; 301) untergebrachten Ölsumpf (2; 102; 202; 302);
d) einer Einrichtung, welche im Betrieb dem Ölsumpf (2; 102; 202; 302) Öl entnimmt und den zu schmierenden, relativ zueinander bewegten Teilen zufördert;
e) mit einem Rücklauf, über welchen Ö1, das in das Kältemittel übergetreten ist, in den Ölsumpf (2; 102; 202; 302) zurückfließt;
f) mit mindestens einer Öffnung (4; 104; 204; 304) im Gehäuse (1; 101; 201; 301), über welche der Ölsumpf (2; 102; 202; 302) zugänglich ist,
**dadurch gekennzeichnet, daß**
g) durch die Öffnung (4; 104; 204; 304) des Gehäuses (1; 101; 201; 301) eine Filtertrocknerkerze (3; 103; 203; 303) in den Ölsumpf (2; 102; 202; 302) eingeführt und mit Hilfe eines die Öffnung (4; 104; 204; 304) dicht verschließenden Verschlußstopfens (10; 110; 210; 310) in der Öffnung (4; 104; 204; 304) lösbar befestigt ist.

2. Kompressor nach Anspruch 1, **dadurch gekennzeichnet, daß** die Öffnung (4; 104) zur Aufnahme einer Ölsumpfheizung ausgebildet und zur Halterung der Filterkerze (3; 103) zweckentfremdet ist.

3. Kompressor nach Anspruch 1, **dadurch gekennzeichnet, daß** die Öffnung (204; 304) im Gehäuse (201; 301) als Ölablaßöffnung ausgebildet ist und die Funktion der Halterung der Filtertrocknerkerze (203; 303) zusätzlich übernimmt.

4. Kompressor nach Anspruch 3, bei welchem der Ansaugweg vom Ölsumpf zur Ölfördereinrichtung teilweise über die Ölablaßöffnung bzw. den diesen verschließenden Verschlußstopfen führt, **dadurch gekennzeichnet, daß** die Filtertrocknerkerze (203; 303) in einer Weise mit der Ölablaßöffnung (204; 304) bzw. mit dem diesen erschließenden Verschlußstopfen (210; 310) verbunden ist, daß das Öl von der Ölfördereinrichtung zumindest teilweise über die Filtertrocknerkerze (203; 303) angesaugt wird.

5. Kompressor nach einem der vorhergehenden Ansprüche, **dadurch gekennzeichnet, daß** das äußere, der Öffnung (4; 204) benachbarte Ende der Filtertrocknerkerze (3; 203) derart am Verschlußstopfen (10; 210) befestigt ist, daß Filtertrocknerkerze (3; 203) und Verschlußstopfen (10; 210) eine gemeinsam am Kompressor montierbare Einheit bilden.

6. Kompressor nach einem der Ansprüche 1 bis 4, **dadurch gekennzeichnet, daß** das äußere, der Öffnung (104; 304) benachbarte Ende der Filtertrocknerkerze (103; 303) an der Öffnung (104; 304) befestigt und dort durch den Verschlußstopfen (110; 310) gesichert ist.

7. Kompressor nach Anspruch 6, **dadurch gekennzeichnet, daß** an der Öffnung (104; 304) eine radiale Stufe (104c; 304c) ausgebildet ist, daß an das der Öffnung (104; 304) benachbarte Ende der Filtertrocknerkerze (103; 303) ein radialer Flansch (116; 316) angeformt und durch den Verschlußstopfen (110; 310) gegen die Stufe (104c; 304c) der Öffnung (104; 304) gedrückt ist.

8. Kompressor nach Anspruch 7, **dadurch gekennzeichnet, daß** zwischen der inneren Stirnfläche des Verschlußstopfens (310) und dem radialen Flansch (316) der Filtertrocknerkerze (303) eine Druckfeder (330) angeordnet ist.

9. Kompressor nach einem der Ansprüche 1 bis 8, **dadurch gekennzeichnet, daß** er als Kolbenkompressor ausgebildet ist.

10. Kompressor nach einem der Ansprüche 1 bis 9, **dadurch** gekenzeichnet, daß er für Klimaanlagen vorgesehen ist.

11. Kompressor nach einem der Ansprüche 1 bis 10, **dadurch gekennzeichnet, daß** die verdrängungskammer ein Zylinder ist.

12. Kompressor nach einem der Ansprüche 1 bis 11, **dadurch gekennzeichnet, daß** der Verdrängungskörper ein Verdichterkolben ist.

13. Kompressor nach einem der Ansprüche 1 bis 12, **dadurch gekennzeichnet, daß** die Einrichtung, welche im Betrieb dem Ölsumpf (2; 102; 202; 302) Öl entnimmt, eine Ölförderpumpe ist.

14. Kompressor nach einem der Ansprüche 1 bis 13, **dadurch gekennzeichnet, daß** die zu schmierenden, relativ zueinander bewegten Teile Laufflächen von Verdrängungskammer und Verdrängungskörper sind.

15. Filtertrocknerkerze mit zugehörigen Verschlußstopfen zur Verwendung bei, einem Kompressor nach einem der Ansprüche 1 bis 14, wobei sie zum Einführen in eine Öffnung (4; 104; 204; 304) des Gehäuses (1; 101; 201; 301) des Kompressors in den Ölsumpf (2; 102; 202; 302) und zur Befestigung in dieser Öffnung (4; 104; 204; 304) mit Hilfe des Verschlußstopfens (10; 110; 210; 310) ausgebildet ist.

## Claims

1. Compressor for refrigeration systems with,
a) a housing (1; 101; 201; 301) which comprises an inlet and an outlet for coolant;
b) at least one displacement chamber arranged in the housing (1; 101; 201; 301) and which may be connected to the inlet and to the outlet for the coolant and in which a displacement body may be axially reciprocated;
c) an oil sump (2; 102; 202; 302) accommodated in the housing (1; 101; 201; 301);
d) a device which, during operation, removes oil from the oil sump (2; 102; 202; 302) and supplies it to the parts to be lubricated which are moved relative to one another;
e) a return line, via which oil which has entered into the coolant flows back into the oil sump (2; 102; 202; 302);
f) at least one opening (4; 104; 204; 304) in the housing (1; 101; 201; 301) via which the oil sump (2; 102; 202; 302) is accessible,
**characterised in that**
g) a tubular filter drier (3; 103; 203; 303) is inserted into the oil sump (2; 102; 202; 302) through the opening (4; 104; 204; 304) of the housing (1; 101; 201; 301) and is releaseably fastened in the opening (4; 104; 204; 304) by means of a sealing plug (10; 110; 210; 310) tightly sealing the opening (4; 104; 204; 304).

2. compressor according to claim 1, **characterised in that** the opening (4; 104) is configured to receive an oil sump heating element and is put to alternative use to hold the filter tube (3; 103).

3. Compressor according to claim 1, **characterised in that** the opening (204; 304) in the housing (201; 301) is configured as an oil drainage opening and additionally adopts the function of holding the tubular filter drier (203; 303).

4. Compressor according to claim 3, in which the suction path from the oil sump to the oil supply device partially passes via the oil drainage opening and the sealing plug sealing said oil sump, **characterised in that** the tubular filter drier (203; 303) is connected to the oil drainage opening (204; 304) and to the sealing plug (210; 310) sealing said oil sump, in such a manner that the oil of the oil supply device is at least partially sucked in via the tubular filter drier (203; 303).

5. Compressor according to any one of the preceding claims, **characterised in that** the outer end, adjacent to the opening (4; 204), of the tubular filter drier (3; 203) is fastened to the sealing plug (10; 210), such that the tubular filter drier (3; 203) and sealing plug (10; 210) form a unit which together may be mounted on the compressor.

6. Compressor according to any one of claims 1 to 4, **characterised in that** the outer end, adjacent to the opening (104; 304), of the tubular filter drier (103; 303) is fastened to the opening (104; 304) and is secured there by the sealing plug (110; 310).

7. Compressor according to claim 6, **characterised in that** a radial step (104c; 304c) is configured on the opening (104; 304), **in that** at the end, adjacent to the opening (104; 304), of the tubular filter drier (103; 303) a radial flange (116; 316) is formed and is pressed against the step (104c; 304c) of the opening (104, 304) by the sealing plug (110; 310).

8. Compressor according to claim 7, **characterised in that** a compression spring (330) is arranged between the inner front face of the sealing plug (310) and the radial flange (316) of the tubular filter drier (303).

9. Compressor according to any one of claims 1 to 8, **characterised in that** said compressor is configured as a piston compressor.

10. Compressor according to any one of claims 1 to 9, **characterised in that** said compressor is provided for air conditioning systems.

11. Compressor according to any one of claims 1 to 10, **characterised in that** the displacement chamber is a cylinder.

12. Compressor according to any one of claims 1 to 11, **characterised in that** the displacement body is a compressor piston.

13. Compressor according to any one of claims 1 to 12, **characterised in that** the device which, during operation, removes oil from the oil sump (2; 102; 202; 302) is an oil supply pump.

14. Compressor according to any one of claims 1 to 13, **characterised in that** the parts to be lubricated and moved relative to one another are running surfaces of the displacement chamber and displacement body.

15. Tubular filter drier with corresponding sealing plug for use with a compressor according to any one of claims 1 to 14, said tubular filter drier being configured for insertion into an opening (4; 104; 204; 304) of the housing (1; 101; 201; 301) of the compressor into the oil sump (2; 102; 202; 302) and for fastening in this opening (4; 104; 204; 304) by means of the sealing plug (10; 110; 210; 310).

## Revendications

1. Compresseur pour systèmes frigorifiques comprenant
a) un boîtier (1 ; 101 ; 201 ; 301), lequel comprend un orifice d'entrée et un orifice de sortie pour le fluide frigorigène ;
b) au moins une chambre de refoulement disposée dans le boîtier (1 ; 101 ; 201 ; 301), qui peut être reliée à l'orifice d'entrée et à l'orifice de sortie pour le fluide frigorigène et dans laquelle un corps de refoulement peut être déplacé en va-et-vient dans le sens axial ;
c) un carter d'huile (2 ; 102 ; 204 ; 304) logé dans le boîtier (1 ; 101 ; 201 ; 301) ;
d) un système, lequel prélève l'huile du carter d'huile (2 ; 102 ; 202 ; 302) au cours du fonctionnement et l'amène aux pièces destinées à être lubrifiées, mobiles les unes par rapport aux autres ;
e) un reflux, par l'intermédiaire duquel l'huile, qui a débordé dans le fluide frigorigène, s'écoule à nouveau dans le carter d'huile (2 ; 102 ; 202 ; 302) ;
f) au moins une ouverture (4 ; 104 ; 204 ; 304) dans le boîtier (1 ; 101 ; 201 ; 301), par l'intermédiaire de laquelle le carter d'huile (2 ; 102 ; 202 ; 302) est accessible,
**caractérisé en ce que** .
g) une bougie sécheuse à filtre (3 ; 103 ; 203 ; 303) est introduite à travers l'ouverture (4 ; 104 ; 204 ; 304) du boîtier (1 ; 101 ; 201 ; 301) dans le carter d'huile (2 ; 102 ; 202 ; 302) et est fixée de manière amovible dans l'ouverture (4 ; 104 ; 204 ; 304) à l'aide d'un bouchon de fermeture (10 ; 110 ; 210 ; 310) fermant l'ouverture (4 ; 104 ; 204 ; 304) de manière étanche.

2. Compresseur selon la revendication 1, **caractérisé en ce que** l'ouverture (4 ; 104) est conçue pour recevoir un dispositif de chauffage de carter d'huile et est détournée de son usage pour maintenir la bougie filtrante (3 ; 103).

3. Compresseur selon la revendication 1, **caractérisé en ce que** l'ouverture (204 ; 304) dans le boîtier (201 ; 301) est conçue comme une ouverture d'évacuation de l'huile et occupe en plus la fonction de maintien de la bougie sécheuse à filtre (203 ; 303).

4. Compresseur selon la revendication 3, dans lequel le trajet d'aspiration du carter d'huile au système d'acheminement de l'huile passe en partie par l'ouverture d'évacuation de l'huile et/ou le bouchon de fermeture fermant celle-ci, **caractérisé en ce que** la bougie sécheuse à filtre (203 ; 303) est reliée à l'ouverture d'évacuation de l'huile (204 ; 304) et/ou au bouchon de fermeture (210 ; 310) rendant celle-ci accessible, de sorte que l'huile est aspirée depuis le système d'acheminement de l'huile en passant au moins en partie par la bougie sécheuse à filtre (203 ; 303).

5. Compresseur selon l'une, quelconque des revendications précédentes, **caractérisé en ce que** l'extrémité extérieure de la bougie sécheuse à filtre (3 ; 203), voisine de l'ouverture (4 ; 204), est fixée au bouchon de fermeture (10 ; 210) de telle sorte que la bougie sécheuse à filtre (3 ; 203) et le bouchon de fermeture (10 ; 210) forment une unité pouvant être montée conjointement sur le compresseur.

6. Compresseur selon l'une quelconque des revendications 1 à 4, **caractérisé en ce que** l'extrémité extérieure de la bougie sécheuse à filtre (103 ; 203), voisine de l'ouverture (104 ; 304), est fixée à l'ouverture (104 ; 304) et y est bloquée par le bouchon de fermeture (110 ; 310).

7. Compresseur selon la revendication 6, **caractérisé en ce qu'**une cellule radiale (104c ; 304c) est conçue sur l'ouverture (104 ; 304), de sorte qu'une bride radiale (116 316) est formée sur l'extrémité de la bougie sécheuse à filtre (103 ; 203) voisine de l'ouverture (104 ; 304) et est pressée par le bouchon de fermeture (110 ; 310) contre la cellule (104c ; 304c) de l'ouverture (104 ; 304).

8. Compresseur selon la revendication 7, **caractérisé en ce qu'**un ressort de compression (330) est disposé entre la surface frontale intérieure du bouchon de fermeture (310) et la bride radiale (316) de la bougie sécheuse à filtre (303).

9. Compresseur selon l'une quelconque des revendications 1 à 8, **caractérisé en ce qu'**il est conçu comme un compresseur à piston.

10. Compresseur selon l'une quelconque des revendications 1 à 9, **caractérisé en ce qu'**il est prévu pour des systèmes de climatisation.

11. Compresseur selon l'une quelconque des revendications 1 à 10, **caractérisé en ce que** la chambre de refoulement est un cylindre.

12. Compresseur selon l'une quelconque des revendications 1 à 11, **caractérisé en ce que** le corps de refoulement est un piston de compression.

13. Compresseur selon l'une quelconque des revendications 1 à 12, **caractérisé en ce que** le système, lequel prélève de l'huile du carter d'huile (2 ; 102 ; 202 ; 302), est une pompe d'acheminement de l'huile.

14. Compresseur selon l'une quelconque des revendications 1 à 13, **caractérisé en ce que** les pièces destinées à être lubrifiées, mobiles les unes par rapport aux autres, sont des surfaces de roulement de la chambre de refoulement et du corps de refoulement.

15. Bougie sécheuse à filtre dotée du bouchon de fermeture associé, destinée à être utilisée dans un compresseur selon l'une quelconque des revendications 1 . à 14, sachant qu'elle est conçue pour être introduite dans une ouverture (4 ; 104 ; 204 ; 304) du boîtier (1 ; 101 ; 201 ; 301) du compresseur dans le carter d'huile (2 ; 102 ; 202 ; 302) et pour être fixée dans cette ouverture (4 ; 104 ; 204 ; 304) à l'aide du bouchon de fermeture (10 ; 110 ; 210 ; 310).
